# FASCICULE DE BREVET EUROPEEN

(11) **EP 0 791 868 B1**
(45) Date de publication et mention de la délivrance du brevet: **30.08.2000**
(21) Numéro de dépôt: 97101756.1
(22) Date de dépôt: 05.02.1997
(51) Int. Cl.: G04G 1/00

(54) **Dispositif d'entrée de données dans des moyens électroniques de traitement de ces données et montre-bracelet qui en est équipée**
Dateneingabevorrichtung für eine diese Daten verarbeitende elektronische Vorrichtung sowie mit dieser versehene Armbanduhr
Data input means for electronic device handling said data and wristwatch equipped with same

(30) Priorité: 23.02.1996 FR 9602266
(43) Date de publication de la demande: 27.08.1997
(73) Titulaire: ASULAB S.A., CH-2501 Bienne (CH)
(72) Inventeur: Terés, Yvan, 2088 Cressier (CH)
(74) Mandataire: Ravenel, Thierry Gérard Louis

(56) Documents cités:
- DE-A- 2 813 234
- US-A- 5 336 001
- IBM RECHNICAL DISCLOSURE BULLETIN, vol. 27, no. 10a, Mars 1985, NEW YORK, pages 5640-5642, XP002018089 "Compact Computer Keyboard"
- PATENT ABSTRACTS OF JAPAN vol. 95, no. 007 & JP 07 175563 A (SHINICHI IKEDA), 14 Juillet 1995,
- PATENT ABSTRACTS OF JAPAN vol. 001, no. 150 (E-070), 5 Décembre 1977 & JP 52 090974 A (SEIKO EPSON CORP), 30 Juillet 1977,

## Description

La présente invention est relative à un dispositif d'entrée de données dans des moyens électroniques de traitement de ces données. Plus particulièrement, l'invention est relative à un tel dispositif comprenant un clavier de touches dont chacune est associée à une plage sensible sous-jacente d'un capteur commandant l'entrée d'une donnée associée à ladite touche en réponse à l'apposition d'un doigt sur cette touche.

On connaît, notamment de la demande de brevet européen EP-A-0 674 247 au nom de la Demanderesse, un tel dispositif associé à une montre pour en commander diverses fonctions, comme la mise à l'heure, l'enclenchement ou le déclenchement d'un chronomètre, à la placé des boutons-poussoirs habituels. On connaît aussi de la demande de brevet européen No 0 165 548 une montre-bracelet comprenant un écran d'affichage numérique, un clavier adjacent et des moyens électroniques de commande de l'affichage sur l'écran de l'heure, ou de résultats intermédiaires ou finaux de calculs mis en oeuvre à l'aide du clavier.

Les touches des claviers incorporés à de telles montres sont constituées par des capteurs de divers types, piézosensibles, photosensibles, résistifs ou capacitifs par exemple. Dans ce dernier cas, la plage sensible de chaque capteur peut être constituée par une électrode transparente formée sur la face intérieure du verre de montre. En posant un doigt sur une plage de la face extérieure de ce verre qui se superpose à cette électrode, on réalise un condensateur électrique entre ce doigt et l'électrode, séparés par le diélectrique que constitue le verre. Un circuit électronique sensible à la capacité de ce condensateur repère l'électrode mise en jeu et donc le caractère ou l'opération ainsi sélectionné pour l'une ou l'autre des applications mentionnées ci-dessus.

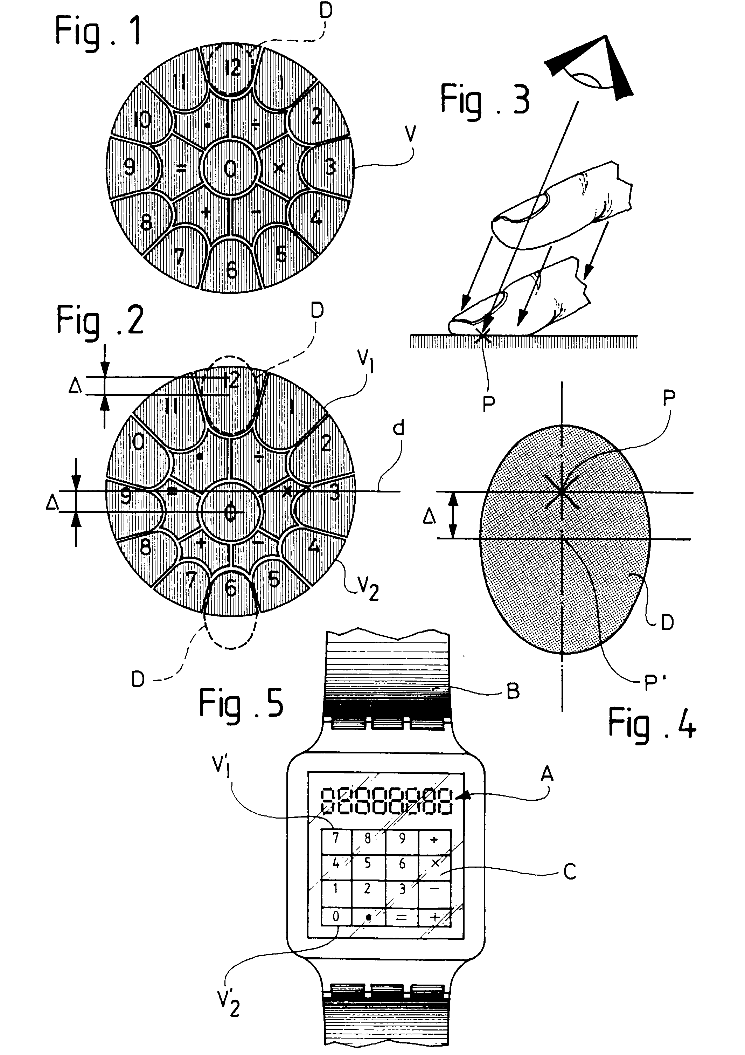

On a représenté à la figure 1, à titre d'exemple, l'agencement et la forme des diverses électrodes que l'on peut former sur un verre de montre V circulaire. Celles-ci peuvent être repérées par des caractères numériques visibles 0 à 12, et par les symboles des diverses opérations utilisées en calcul numérique. Les caractères numériques peuvent être agencés en couronne, comme les repères des heures de la journée, les symboles d'opérations se trouvant sur une autre couronne interne à la présente et le zéro se trouvant au centre du verre. Les électrodes d'une même couronne sont alors classiquement de forme et de surface identiques, les caractères et autres symboles étant centrés sur l'électrode correspondante.

On conçoit que la surface de l'empreinte D (voir figure 1) d'un doigt n'étant pas très petite par rapport à celle d'un verre de montre, elle-même limitée notamment quand il s'agit d'une montre-bracelet, il est difficile de poser le doigt sur le verre de montre, au-dessus de l'une des électrodes représentées à la figure 1, sans influencer du même coup les électrodes adjacentes. Pour identifier alors, parmi les électrodes influencées, celle qui était visée, les moyens électroniques incorporés à la montre doivent développer des stratégies d'identification complexes.

Le recours à de telles stratégies pourrait être supprimé, ou au moins limité, si les formes des électrodes imbriquées du clavier étaient adaptées aux conditions dans lesquelles s'opère le contact doigt/clavier.

La présente invention a précisément pour but de réaliser un dispositif d'entrée de données dans des moyens de traitement de ces données, à l'aide d'un clavier ergonomiquement adapté audit contact doigt/clavier.

On atteint ces buts de l'invention, ainsi que d'autres qui apparaîtront à la lecture de la description qui va suivre, avec un dispositif d'entrée de données dans des moyens électroniques de traitement de ces données, comprenant un clavier de touches dont chacune est associée à une plage sensible sous-jacente d'un capteur commandant l'entrée d'une donnée associée à ladite touche en réponse à l'apposition d'un doigt sur cette touche, ces plages sensibles s'imbriquant étroitement à l'intérieur d'un contour fermé présentant, pour un utilisateur, une partie supérieure et une partie inférieure adjacentes à des première et deuxième séries de plages, respectivement, ce dispositif étant remarquable en ce que les aires des plages de la première série sont dans l'ensemble supérieures aux aires des plages de la deuxième série.

Suivant une autre caractéristique du dispositif selon l'invention, au moins un des symboles portés par les touches du clavier est plus proche de la partie supérieure du contour fermé que le centre de la plage sensible associée.

Comme on le verra dans la suite, ces caractéristiques se combinent avantageusement pour optimiser la conformité des empreintes des doigts et des plages sensibles des capteurs du dispositif.

D'autres caractéristiques et avantages de la présente invention apparaîtront à la lecture de la description qui va suivre et à l'examen du dessin annexé dans lequel :
- la figure 1 est une vue schématique agrandie d'un agencement classique d'électrodes sur un verre de montre, décrit et discuté en préambule de la présente description;
- la figure 2 est une vue schématique, similaire à celle de la figure 1, d'un premier mode de réalisation de l'agencement d'électrodes du dispositif suivant la présente invention;
- les figures 3 et 4 sont des schémas utiles à la compréhension de la présente invention, et
- la figure 5 est une représentation schématique d'une montre-bracelet équipée d'un autre mode de réalisation du dispositif suivant l'invention.

On se réfère à la figure 2 du dessin annexé où l'on retrouve les deux couronnes de plages sensibles, ou électrodes, de la figure 1, ces électrodes étant portées par la face intérieure d'un verre de montre formant partie du dispositif selon l'invention, ce verre présentant un contour fermé, circulaire en l'occurrence. On peut diviser ce contour en deux parties V₁ et V₂, supérieure et inférieure respectivement, séparées par un diamètre d du verre de montre. Ce diamètre est sensiblement parallèle à un axe passant par les yeux d'un utilisateur qui porte la montre à son bras à l'aide d'un bracelet (non représenté) comme cela est classique.

Le dispositif comprend en outre des moyens électroniques (non représentés) de traitement des données entrées à l'aide du clavier ainsi constitué, soit pour la commande d'aiguilles d'affichage horaire, soit pour la présentation de résultats partiels ou finaux de calculs sur un afficheur (non représenté), à cristaux liquides par exemple.

La couronne des plages sensibles périphériques du verre de montre se divise alors en des première et deuxième séries qui suivent respectivement les parties supérieure V₁ et inférieur V₂ du contour du verre, respectivement. Ces deux séries sont repérées par des symboles visibles présentant les données entrées par contact d'un doigt avec le verre de montre, caractères numériques 1 à 12 ou symboles d'opérations. C'est ainsi que les première et deuxième séries de plages sont constituées par des plages (10, 11, 12, 1, 2) et (3, 4, 5, 6, 7, 8, 9) respectivement.

Il apparaît immédiatement à l'examen de la figure 2 que les plages de la première série (10, 11, 12, 1, 2) sont d'aire supérieure à celles des plages de la deuxième série (3 à 9), les aires des plages de la disposition classique représentée à la figure 1 se situant entre les deux.

En accroissant ainsi, suivant l'invention, les aires des plages de la première série par rapport à celles de la disposition classique, on supprime ou on réduit le recouvrement des plages adjacentes par le contour de l'empreinte d'un doigt appuyé sur le verre de montre, au-dessus d'une plage sélectionnée, comme illustré à la figure 2 sur la plage 12.

Cependant, cet accroissement des surfaces des plages de la première série oblige à réduire les surfaces de la deuxième série (inférieure) si l'on ne souhaite pas agrandir la surface du verre de montre, comme cela est préférable. Les surfaces des plages 3 à 9 de la deuxième série sont alors plus réduites que dans la disposition classique de la figure 1. Cela est sans inconvénient, bien au contraire. En effet, comme illustré sur la plage 6, l'empreinte D du doigt tombe largement, pour les plages de la deuxième série, à l'extérieur de la partie V₂ du contour du verre, ce qui réduit la surface utile de l'empreinte et son influence éventuelle sur les plages adjacentes.

On peut améliorer encore la correspondance entre les surfaces des empreintes des doigts et celles des plages sensibles associées. En effet, comme illustré schématiquement aux figures 3 et 4, des études ont montré que l'empreinte laissée par le doigt d'un observateur autour d'un repère P formé sur un surface et visé par ce dernier pour y déposer un doigt, est systématiquement excentrée par rapport au repère visé. Le contour sensiblement ovale de ladite empreinte D est centré sur un point P' décalé d'une distance Δ vers le bas de la surface qui porte le repère P, alors qu'on ne remarque aucun décalage sensible du point P' dans la direction orthogonale à celle du décalage d'amplitude Δ. On a pu mesurer que Δ variait couramment entre 2 et 4 mm environ. Ce décalage peut s'expliquer par des caractéristiques morphologiques de l'être humain et par le fonctionnement de ses yeux pour repérer un point dans l'espace.

On peut tirer parti de cette observation pour améliorer encore le recouvrement d'un plage sensible et de l'empreinte d'un doigt posé sur celle-ci par visée d'un symbole ou repère visible sur cette plage. Pour ce faire, suivant l'invention, le symbole visé est décalé, vers la partie supérieure du contour, de ladite distance Δ, par rapport au centre géométrique de la plage repérée par ce symbole, comme cela est représenté en particulier pour le nombre 12 repérant une des plages représentées à la figure 2. Les contours de chacune des plages peuvent être dessinés, dans la mesure du possible, de manière à se conformer à celui de l'empreinte du doigt sur le verre de montre, tel qu'il se pose sur celui-ci par visée du symbole repérant la plage. On évite ainsi au mieux des chevauchements parasites de cette empreinte sur des parties de plages adjacentes.

On a représenté à la figure 5 un autre mode de réalisation de l'invention, incorporé à une montre comprenant un afficheur A disposé au-dessus d'un clavier numérique C. La montre se fixe au poignet d'un utilisateur à l'aide d'un bracelet B. Pour simplifier, on suppose que les plages sensibles du dispositif sont conformes aux touches du clavier C. L'aire de chacune des touches (7, 8, 9, ÷), qui longent la partie supérieure V₁ du contour du clavier, est plus grande que celle des touches (0, ., =, +) qui longent la partie inférieure V'₂ de ce contour. Les deux rangées intermédiaires peuvent être avantageusement de dimensions identiques à celles de la rangée supérieure. Les symboles visibles sur les touches sont décalés vers le haut, pour les raisons exposées en liaison avec la figure 2.

Il apparaît maintenant que l'invention permet bien d'atteindre le but que l'on s'était fixé, à savoir améliorer l'ergonomie d'un clavier du type envisagé ci-dessus, notamment quand l'aire de la surface totale de ce clavier est faible, sensiblement inférieure à n fois l'aire de l'empreinte d'un doigt, n étant le nombre de touches du clavier.

Bien entendu, l'invention n'est pas limitée aux modes de réalisation décrits et représentés qui n'ont été donnés qu'à titre d'exemple. Ainsi l'invention s'étend à des produits autres que des montres-bracelets ou autre appareils à clavier susceptibles d'être fixés sur un bras d'un utilisateur, et notamment à tout clavier de surface réduite tel qu'une calculette miniature pouvant se glisser dans un portefeuille, par exemple.

On notera également que selon une variante particulièrement adaptée au mode de réalisation représenté à la figure 5, on peut prévoir des plages sensibles ayant une aire identique pour toutes les touches et que les symboles (7, 8, 9, etc) sont tous décalés vers le haut du clavier de la distance Δ.

## Revendications

1. Dispositif d'entrée de données dans des moyens électroniques de traitement de ces données, comprenant un clavier de touches dont chacune est associée à une plage sensible sous-jacente d'un capteur commandant l'entrée d'une donnée associée à ladite touche en réponse à l'apposition d'un doigt sur cette touche, ces plages sensibles s'imbriquant étroitement à l'intérieur d'un contour fermé (V₁, V₂; V'₁, V'₂) présentant, pour un utilisateur, une partie supérieure (V₁) et une partie inférieure V₂) adjacentes à des première et deuxième séries de plages, respectivement, caractérisé en ce que les aires des plages (10, 11, 12, 13; 7, 8, 9, ÷) de la première série sont dans l'ensemble supérieure aux aires des plages (3 à 9; 0, ., =, +) de la deuxième série.

2. Dispositif selon la revendication 1, comportant un jeu de symboles visibles portés chacun par une des touches pour identifier la donnée dont l'entrée est commandée par ladite touche, caractérisé en ce qu'au moins un desdits symboles est plus proche du bord supérieur (V₁; V'₁) du contour fermé que le centre de la plage sensible associée.

3. Dispositif selon la revendication 2, caractérisé en ce que la distance (Δ) séparant ledit symbole et ledit centre est comprise entre 2 et 4 mm environ.

4. Dispositif selon l'une quelconque des revendications 1 à 3, caractérisé en ce que l'aire de la surface intérieure au contour fermé (V₁, V₂; V'₁, V'₂) est sensiblement inférieure à n fois l'aire de l'empreinte (D), d'un doigt sur le clavier, n étant le nombre de touches du clavier.

5. Montre-bracelet équipée d'un dispositif selon l'une quelconque des revendications 1 à 4.

6. Montre-bracelet selon la revendication 5, caractérisée en ce que l'ensemble des plages sensibles est porté par une face du verre de la montre.

## Patentansprüche

1. Vorrichtung zur Eingabe von Daten in elektronische Mittel zur Verarbeitung dieser Daten, die eine Tastatur mit Tasten umfaßt, wovon jede einem darunterliegenden empfindlichen Bereich eines Aufnehmers zugeordnet ist, der als Antwort auf das Anschlagen eines Fingers an dieser Taste die Eingabe eines der Taste zugeordneten Datums steuert, wobei diese empfindlichen Bereiche innerhalb eines geschlossenen Umrisses (V₁, V₂; V'₁, V'₂) eng überlappen, wobei der Umriß für einen Anwender einen oberen Teil (V₁) und einen unteren Teil (V₂) aufweist, die an eine erste bzw. eine zweite Reihe von Bereichen angrenzen, dadurch gekennzeichnet, daß sich die Grundflächen der Bereiche (10, 11, 12, 13; 7, 8, 9, ÷) der ersten Reihe in der Gesamtheit befinden, die sich über den Grundflächen der Bereiche (3 bis 9; 0, ., =, +) der zweiten Reihe befindet.

2. Vorrichtung nach Anspruch 1, umfassend einen Satz sichtbarer Symbole, wovon jedes von einer der Tasten getragen wird, um das Datum zu identifizieren, dessen Eingabe durch diese Taste gesteuert wird, dadurch gekennzeichnet, daß sich wenigstens eines der Symbole näher am oberen Rand (V₁; V'₁) des geschlossenen Umrisses als die Mitte des zugeordneten empfindlichen Bereichs befindet.

3. Vorrichtung nach Anspruch 2, dadurch gekennzeichnet, daß der das Symbol und die Mitte trennende Abstand (Δ) im Bereich von ungefähr 2 bis ungefähr 4 mm liegt.

4. Vorrichtung nach einem der Ansprüche 1 bis 3, dadurch gekennzeichnet, daß die Grundfläche der inneren Oberfläche des geschlossenen Umrisses (V₁, V₂; V'₁, V'₂) wesentlich kleiner als die n-fache Grundfläche des Abdrucks D eines Fingers auf der Tastatur ist, wobei n die Anzahl der Tasten der Tastatur ist.

5. Armbanduhr, die mit einer Vorrichtung nach einem der Ansprüche 1 bis 4 ausgerüstet ist.

6. Armbanduhr nach Anspruch 5, dadurch gekennzeichnet, daß die Gesamtheit der empfindlichen Bereiche von einer Glasfläche der Uhr getragen wird.

## Claims

1. Device for inputting data into electronic data processing means, comprising a keyboard each of whose keys is associated with an underlying sensitive pad of a sensor which controls the input of data associated with said key in response to an application of a finger on such key, such sensitive pads being closely set together within a closed contour (V₁, V₂; V'₁, V'₂) having, for a user, an upper part (V₁) and a lower part (V₂) respectively adjacent to first and second series of pads, such device being characterized in that the areas of the pads (10, 11, 12, 13; 7, 8, 9, ÷ ) of the first series are on the whole greater than the areas of the pads (3 to 9; 0, ., =, +) of the second series.

2. Device according to claim 1, comprising a set of visible symbols each borne by one of the keys to identify the data whose input is controlled by said key, characterized in that at least one of said symbols is closer to the upper edge (V₁; V'₁) of the closed contour than the centre of the associated sensitive pad.

3. Device according to claim 2, characterized in that the distance (Δ) separating said symbol and said centre is comprised approximately between 2 and 4 mm.

4. Device according to any of the claims 1 to 3, characterized in that the area of the inner surface of the closed contour (V₁, V₂; V'₁, V'₂) is substantially less than n times the area of the print (D), of a finger on the keyboard, n being the number of keyboard keys.

5. Wristwatch fitted with a device according to any of claims 1 to 4.

6. Wristwatch according to claim 5, characterized in that the sensitive pad assembly is borne by a face of the watch crystal.
